# EUROPEAN PATENT APPLICATION

(11) **EP 2 378 024 A2**
(43) Date of publication of application: **19.10.2011**
(21) Application number: 11461510.7
(22) Date of filing: 05.04.2011
(51) Int. Cl.: E04C 2/52, F24D 5/10, E04B 1/61

(54) **Structural panel**

(30) Priority: 14.04.2010 PL 39097910
(71) Applicant: Tudziarz, Zenon, 56-300 Milicz (PL)
(72) Inventor: Tudziarz, Zenon, 56-300 Milicz (PL)
(74) Representative: Witek, Rafal

(57) **Abstract**

The present invention relates to a single- or multi-chamber structural panel containing walls characterized in that the walls of the panel (1.1) are joined together by means of shape connections. Other subject matters of the invention describe the structural elements based on the panels according to the present invention and the method of the houses construction.

## Description

The present invention relates to a structural panel applicable in the framework building to construct structural elements of houses or other buildings.

There are known structural panels disclosed in the European patent EP215797 that are constructed of walls made of composite materials. Mentioned panels are hollow inside and combined by its shorter walls by means of keys. In spite of its own undeniable advantages such as lightness of the construction and thereby easiness and quickness of the construction, said panels have also drawbacks such as impossibility of combining them into longer walls without horizontal partitions, which made impossible to perform water systems, electrical systems or heating systems in vertical manner inside the connected panels. There are also known the structural panels disclosed in the American patent U.S. Pat. No. 3662507, which despite the specific construction characterised in that the wider walls of the panels are disconnectable, they still have the above mentioned disadvantage that consists in impossibility of performing building installations without constraint of forming holes inside the shorter walls of the panel. Thus, there still exists an unsolved problem consisting in providing such construction of the framework house, that will made possible to perform the building installations in vertical manner inside the structural panels without necessity of their additional processing. Unexpectedly it was turned out that the presented problem is dissolved by the present invention.

In its first aspect, the present invention provides the single- or multi-chamber structural panel characterized in that the walls of the panel are joined together by means of shape connections. The elements of the panel can be made of continuous glass fibres or cut carbon fibres or basaltic fibres, polymers, resins, aluminium or wood, or other materials known to the person skilled in the art of building engineering. Conveniently, panel according to the present invention is characterized in that the shape connection includes a pin and a hub, which are fixed on the opposite sides of the panel wall in the way enabling their connection. Preferably, the panel according to the present invention is characterized in that the shape connection is an integral part of the panel wall. Equally preferably, the shape connections in the panel according to the present invention are arranged along the panel. Conveniently, the walls of the panel according to the present invention are combined by means of shape connections of the pushed-in or snap type.

In its second aspect, the present invention provides the structural or partition element characterized in that its framework constitutes the panel, the walls of which are joined together by means of shape connections. Equally preferably, the element according to the present invention is characterized in that additionally it includes insulating materials, constructional materials or building installations. The structural elements constructed on the basis of the panels according to the present invention have the air chambers, wherein the building installations are performed, for example a gravity heating.

In its third aspect, the present invention provides a method of the framework houses construction from the single- or multi-chamber panels characterized in that the method includes:
(a) a preparation of a house base
(b) an erection of the framework house construction built from the chamber panels, the walls of which are connected by means of shape connections, on the previously prepared house base.

Equally preferably, the method according to the present invention is characterized in that the chamber panels include the heating systems, water systems, electrical systems or telecommunications systems. Preferably, the method according to the present invention is characterized in that the panels contain insulating or reinforced materials. Equally conveniently, the method according to the present invention is characterized in that the heating system is based on the gravity heating of the chambers of the panels directly with the worm air that is circulating by convection inside the chamber panels. Preferably, the method according to the present invention is characterized in that includes fixing of the construction of the framework house to the house base using known methods such as e.g. anchors or other methods known to the person skilled in the art. Equally preferably, the method according to the present invention is characterized in that the preparation of the house base includes formation of the foundation.

The framework of the building is made of composite materials, which have suitable fire resistance and are many times more resistant than materials conventionally used in the building engineering hitherto. The walls besides the strong framework, are distinguished also by an air vacuum with one, two, three or more chambers, which results in the wall respiration. This creates great protective system of the building because it can provide stable and controllable climatic conditions, independently whether the building needs to be heated or cooled. Additionally it makes possible to perform every kind of installations inside the walls without necessity of their forging, e.g. the heating systems, wherein a heating medium migrates along the structural elements that are built on the basis of the structural panels according to the present invention. Such distribution of the installations additionally cuts down the time and facilitates the construction of the houses.

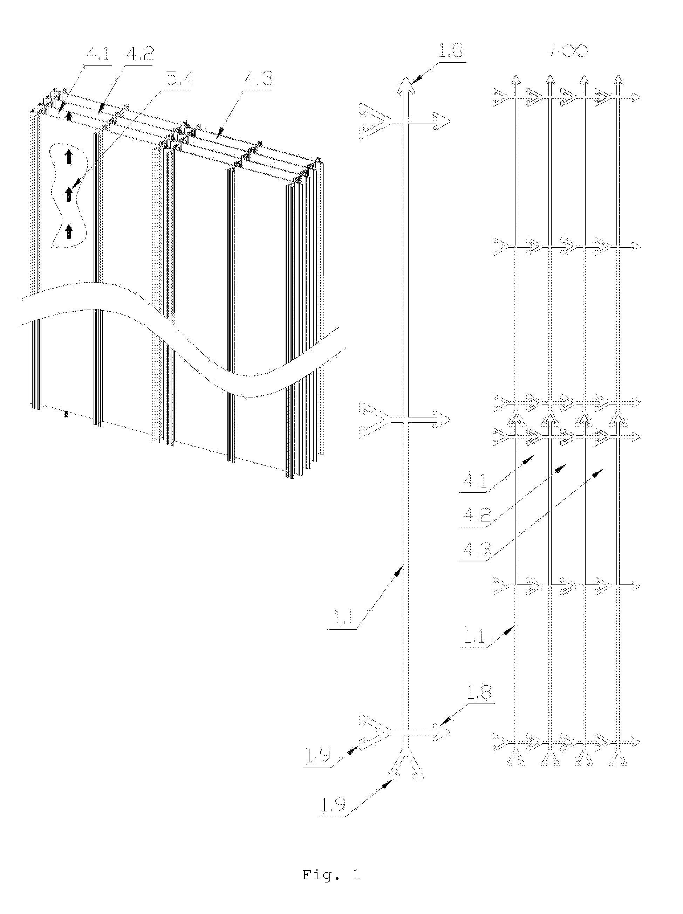

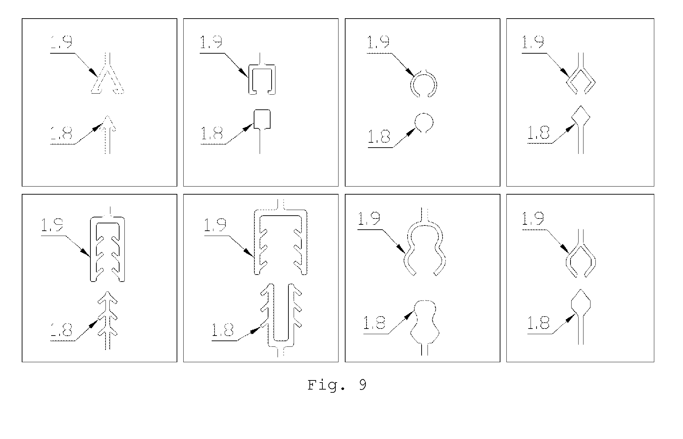

The examples of embodiments of the invention are illustrated in the accompanying drawings, in which fig. 1 illustrates the structure of the structural panel in the multi-chamber variant, fig. 2 illustrates a cross-section view of the two-chamber structural panel encased in the wall during connecting of the panels, fig. 3 shows the connection of the corner walls built on the multi-chamber panel, fig. 4 illustrates the connection of the partition and external walls; fig. 5 shows the connection of the partition walls; fig. 6 illustrates the connection of the walls with the door or window profile; fig. 7 illustrates the cross-section of the walls and a mounting of a ceiling; fig. 8 illustrates the connection of the walls with a floor, fig. 9 illustrates exemplary shape connections utilized in the present invention, and fig. 10 shows the house built according to the present invention heated by means of the heating medium that is circulating by convection inside the structural or partition elements built on the basis of the structural panels according to the present invention.

### Example 1. The chamber panel and the structural element

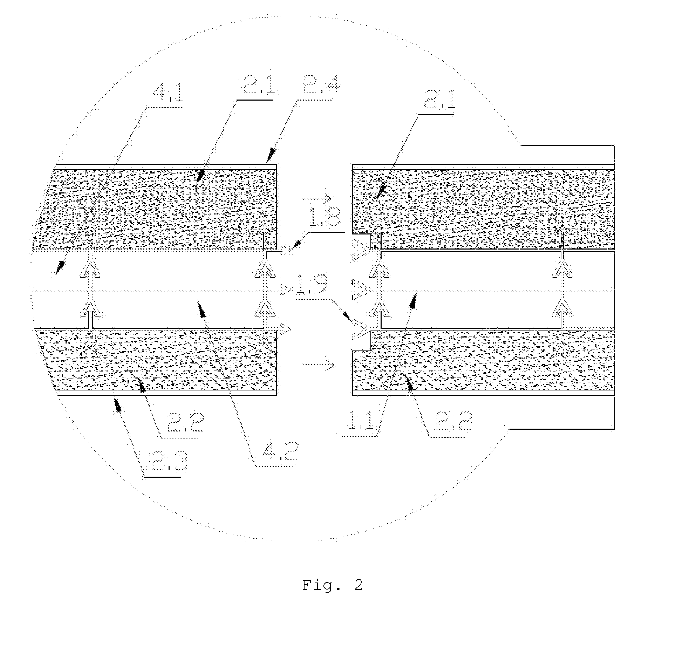

The chamber panel consists of the walls of the panel 1.1, which are connected by means of the shape connections of the pushed-in type that include the pin 1.8 and the hub 1.9 mounted on the opposite sides of the panel wall 1.1. The exemplary two-chamber panel is illustrated in the fig. 2. The panel comprises two chambers 4.1 and 4.2. Said panel additionally comprises an external casting material (2.1) and an external plaster work (2.4) on the outer side of the chamber panel, and an internal casting material (2.2) and an internal plaster work (2.3) on the inner side of the chamber panel, to form the structural or partition element. Such structure of the panel enables to perform the building installations along the entire wall inside chambers (4.1) or (4.2).

### Example 2. The structural or partition elements and their connection

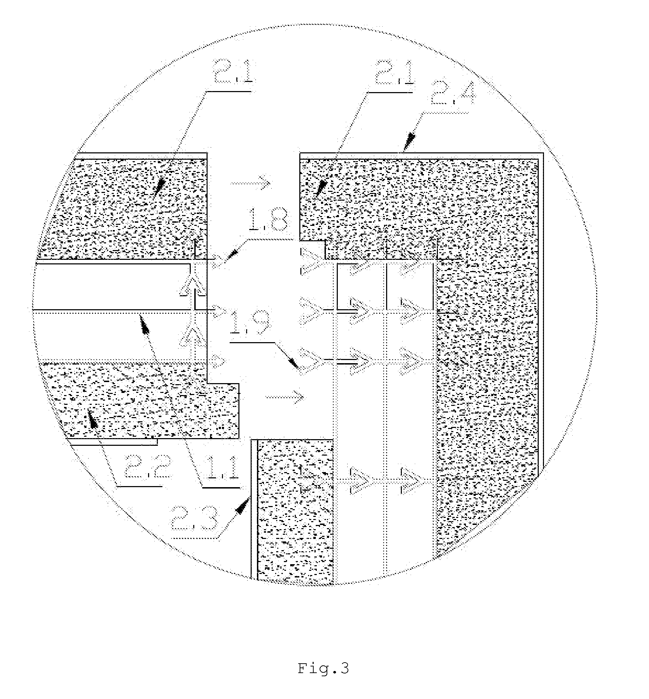

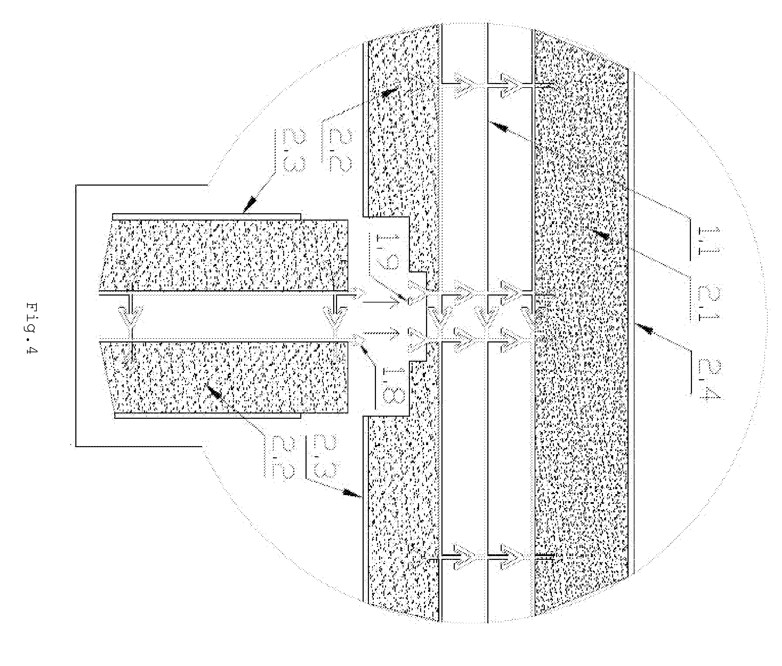

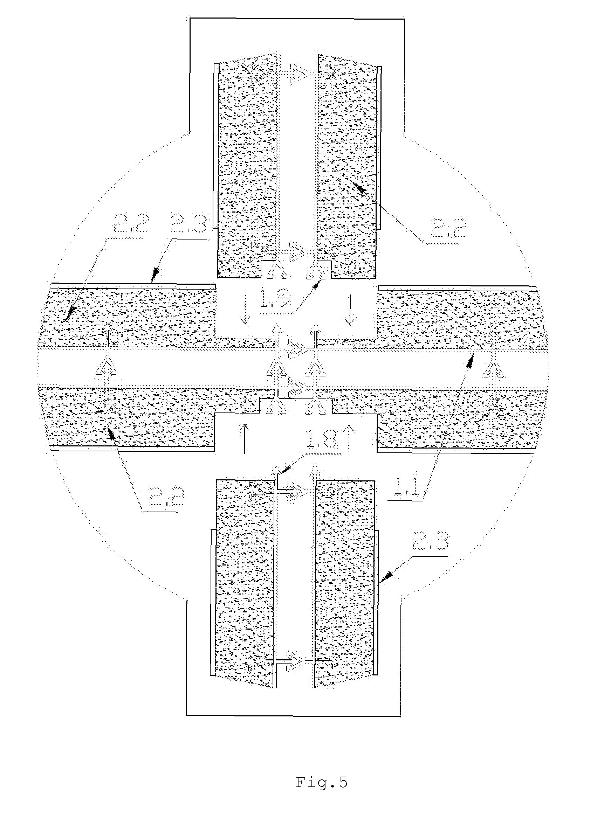

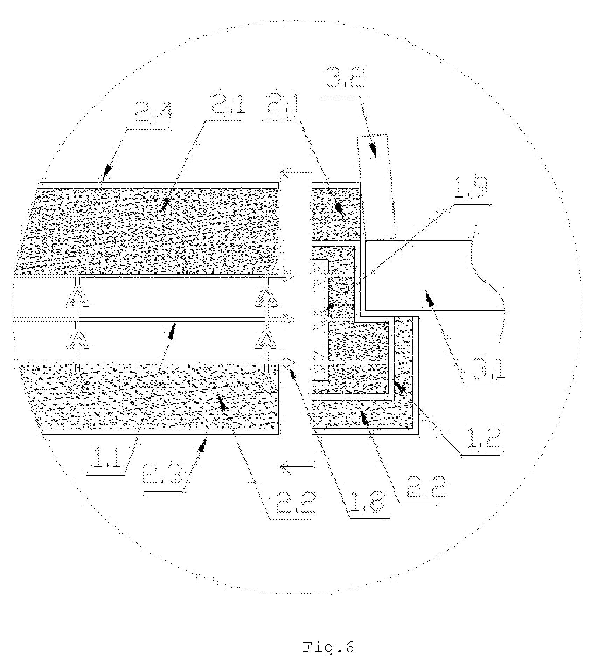

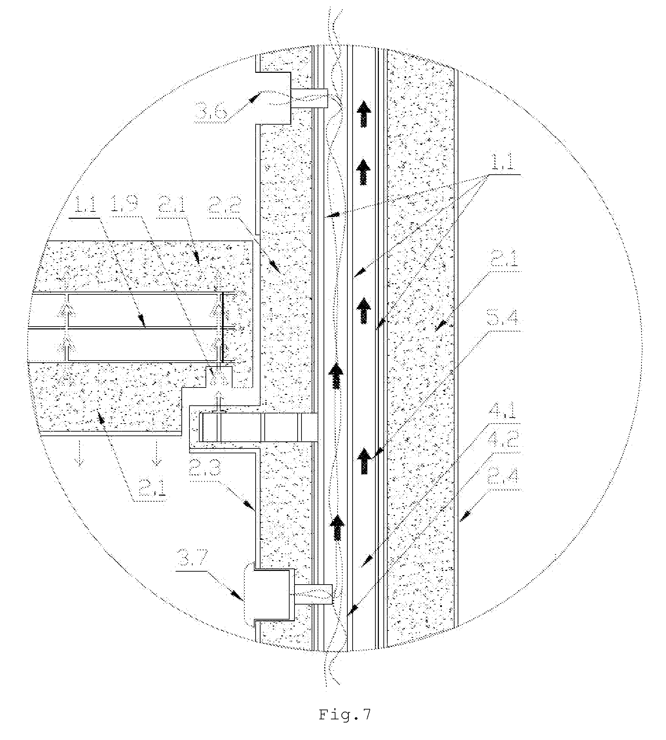

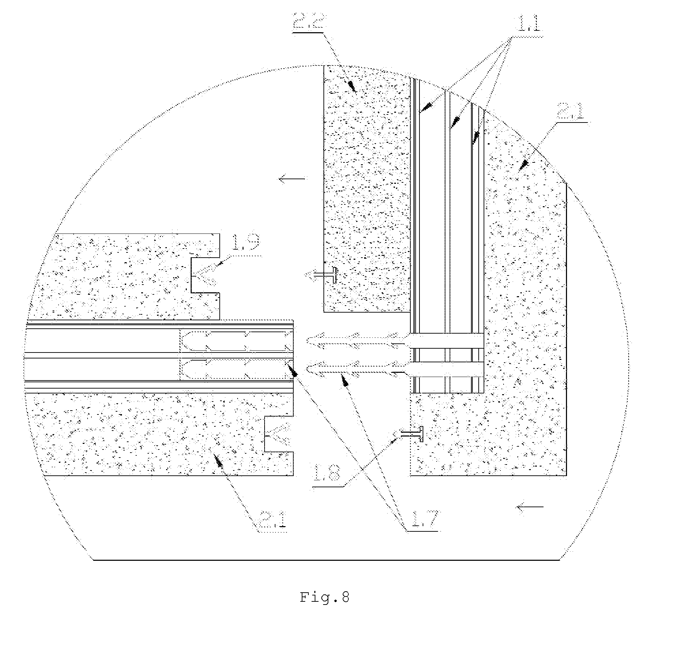

Figs. 2 to 7 illustrate the structural or partition element built on the basis of the chamber panel according to the present invention. Fig. 2 illustrates the cross-section of the two-chamber structural panel encased in the structural element during connecting of the panels, fig. 3 shows the connection of the corner structural elements built on the two-chamber panel, fig. 4 illustrates the connection of the partition and structural elements; fig. 5 shows the connection of the partition elements; fig. 6 shows the connection of the structural elements with the door or window profile; fig. 7 illustrates the cross-section of the structural element and the mounting of a ceiling; fig. 8 shows the connection of the structural element with the floor. In all the figures, the finishing elements 2.1, 2.2, 2.3 and 2.4 have the same meaning as described in the example 1.

### Example 3. The construction of the house using the panel according to the present invention.

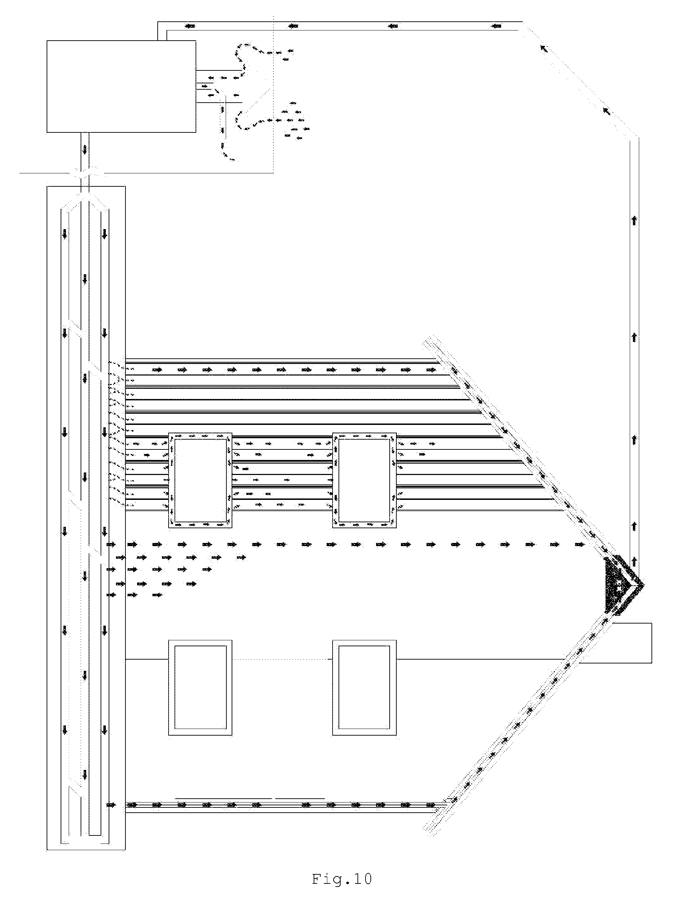

The panels described in the example 1 and their connection described in the example 2 apply to the construction of the houses. The floor made of the structural elements presented in the example 2 is placed on the previous prepared ground by means of the foundation. The floor is fixed to the foundation by means of the anchors. Then, the walls are connected to the floor, as it is shown in the fig. 8. The ceiling, as shown in the fig. 7, and a roof are connected in analogous manner. Next, the installations are distributed, as it is shown in the fig. 7. The gravity heating occurs inside the structural elements in the air chambers 4.1 and 4.2 along the structural elements built on the basis of the structural panels according to the present invention, as it is shown in the fig. 10

## Claims

1. A single- or multi-chamber structural panel containing the walls, **characterized in that** the walls of the panel (1.1) are joined together by means of the shape connections.

2. The panel according to claim 1, **characterized in that** the shape connection includes the pin (1.8) and the hub (1.9), which are fixed on the opposite sides of the panel wall (1.1) in the way enabling their connection.

3. The panel according to claim 1 or 2, **characterized in that** the shape connection is an integral part of the panel wall (1.1).

4. The panel according to anyone of the claims 1 to 3, **characterized in that** the shape connections are arranged along the structural panel.

5. The panel according to anyone of the claims 1 do 4, **characterized in that** the walls of the panel (1.1) are connected by means of the shape connections of the pushed-in or snap type.

6. A structural or partition element of the house, **characterized in that** its framework constitutes the panel, the walls (1.1) of which are joined together by means of the shape connections.

7. The element according to claim 6, **characterized in that** the element additionally includes the insulating materials, the constructional materials or the building installations.

8. A method of the framework houses construction from the single- or multi-chamber panels, **characterized in that** the method includes:
(a) a preparation of the house base
(b) an erection of the framework house construction built from the chamber panels, the walls of which (1.1) are connected by means of the shape connections on the previously prepared house base;

9. The method according to claim 8, **characterized in that** the chamber panels from the step (b) include the heating systems, water systems, electrical systems or others.

10. The method according to claim 9, **characterized in that** the chamber panels from the step (b) include the insulating or reinforced materials.

11. The method according to claim 10, **characterized in that** the heating system is based on the gravity heating of the chambers of the panels from the step (b) directly with the worm air that is circulating by convection inside the chamber panels.

12. The method according to claim 8, **characterized in that** the erection of the house according to the step (b) of the framework type, includes the fixing of the construction of the framework house to the house base.

13. The method according to claim 8, **characterized in that** the preparation of the house base according to step (a) includes the formation of the foundation.
